# EUROPEAN PATENT SPECIFICATION

(11) **EP 4 144 541 B1**
(45) Date of publication and mention of the grant of the patent: **02.10.2024**
(21) Application number: 22191005.2
(22) Date of filing: 18.08.2022
(51) Int. Cl.: B60C 11/03, B60C 11/12

(54) **TIRE**
REIFEN
PNEU

(30) Priority: 02.09.2021 JP 2021143403
(43) Date of publication of application: 08.03.2023
(73) Proprietor: SUMITOMO RUBBER INDUSTRIES, LTD., Kobe-shi, Hyogo 651-0072 (JP)
(72) Inventor: NAKAJIMA, Koichi, Kobe-shi, Hyogo, 651-0072 (JP)
(74) Representative: Winter, Brandl - Partnerschaft mbB

(56) References cited:
- EP-B1- 0 782 936
- EP-B1- 3 466 719
- CN-A- 104 955 660
- JP-A- H04 201 607
- US-A1- 2023 079 496

## Description

### BACKGROUND OF THE INVENTION

### Field of the Invention

The present invention relates to a tire.

### Background Art

Japanese Laid-Open Patent Publication No. 2020-132129 discloses a tire having a tread portion. The tread portion has a first tread end, a plurality of main grooves extending continuously in the tire circumferential direction between the first tread end and a second tread end, and a plurality of land portions demarcated by the main grooves.

In the tire, although noise can be reduced, there is room for improving uneven wear resistance. Documents CN 104 955 660 A discloses a tire according to the preamble of claims 1. Documents JP H 04 201607 A, EP 0 782 936 B1 and EP 3 466 719 B1 disclose further tires.

Starting from a tire as disclosed in CN 104 955 660 A an object of the present invention is to provide a tire that allows noise performance to be enhanced without degrading uneven wear resistance.

### SUMMARY OF THE INVENTION

A tire according to the present invention is directed to a tire including a tread portion. The tread portion includes a first tread ground contact end on one side in a tire axial direction, a first shoulder circumferential groove disposed closest to the first tread ground contact end, and a first shoulder land portion demarcated to be disposed outwardly of the first shoulder circumferential groove in the tire axial direction. A plurality of first shoulder groove-like portions extending from the first shoulder circumferential groove to the first tread ground contact end is disposed in the first shoulder land portion. A pair of first shoulder groove-like portions adjacent to each other in a tire circumferential direction among the plurality of first shoulder groove-like portions have different angles θ1 relative to the tire axial direction. The plurality of first shoulder groove-like portions includes a plurality of kinds of first shoulder groove-like portions having different first pitch lengths each representing a pitch length in the tire circumferential direction at a connecting portion to the first shoulder circumferential groove. A maximum value of the first pitch length is 1.2 to 1.5 times an average of the first pitch lengths.

In the tire of the present invention, a minimum value of the first pitch length is 0.5 to 0.8 times the average of the first pitch lengths.

In the tire of the present invention, the angle θ1 is -70 to 70° when an angle representing inclination to one side in the tire circumferential direction is set as having a positive value.

In the tire of the present invention, a plurality of first units formed of a part of the first shoulder groove-like portions among the plurality of first shoulder groove-like portions are aligned in the tire circumferential direction in the first shoulder land portion. The first units each include a first portion in which the first shoulder groove-like portions that have the angles θ1 indicating positive values when an angle representing inclination to the one side in the tire circumferential direction is set as having a positive value, are continuously disposed, and a second portion in which the first shoulder groove-like portions that have the angles θ1 indicating negative values are continuously disposed.

In the tire of the present invention, each first unit further includes a third portion including the first shoulder groove-like portion that has the angle θ1 indicating zero.

In the tire of the present invention, the angles θ1 of the first shoulder groove-like portions of each of the first portion and the second portion continuously vary between a maximum value and a minimum value of the angle.

In the tire of the present invention, a second pitch length that is a pitch length, in the tire circumferential direction, for the plurality of first shoulder groove-like portions at a center position, in the tire axial direction, of the first shoulder land portion, is substantially constant.

In the tire of the present invention, the first shoulder land portion includes a plurality of first shoulder blocks demarcated by the plurality of first shoulder groove-like portions, and areas of tread surfaces of the plurality of first shoulder blocks are substantially equal to each other.

In the tire of the present invention, the plurality of first shoulder groove-like portions are sipes each having a groove width of not greater than 1.0 mm.

In the tire of the present invention, the plurality of first shoulder groove-like portions are lateral grooves each having a groove width of greater than 1.0 mm.

In the tire of the present invention, the groove width is gradually increased from the first shoulder circumferential groove toward the first tread ground contact end.

In the tire of the present invention, each of the plurality of first shoulder groove-like portions has a groove volume increased in proportion to the angle θ1.

In the tire of the present invention, each of the plurality of first shoulder groove-like portions includes a protruding portion extending outwardly from the first tread ground contact end in the tire axial direction, and a maximum groove width of the protruding portion is not greater than 7.0 mm.

In the tire of the present invention, the tread portion includes a second tread ground contact end on another side in the tire axial direction, a second shoulder circumferential groove disposed closest to the second tread ground contact end, and a second shoulder land portion demarcated so as to be disposed outwardly of the second shoulder circumferential groove in the tire axial direction. A plurality of second shoulder groove-like portions extending from the second shoulder circumferential groove to the second tread ground contact end is disposed in the second shoulder land portion. A pair of second shoulder groove-like portions adjacent to each other in the tire circumferential direction among the plurality of second shoulder groove-like portions have different angles θ2 relative to the tire axial direction. The plurality of second shoulder groove-like portions includes a plurality of kinds of second shoulder groove-like portions having different third pitch lengths each representing a pitch length in the tire circumferential direction at a connecting portion to the second shoulder circumferential groove.

In the tire of the present invention, the second shoulder groove-like portions and the first shoulder groove-like portions closest to the second shoulder groove-like portions in the tire circumferential direction are inclined in a same direction.

In the tire of the present invention, the second shoulder groove-like portions and the first shoulder groove-like portions closest to the second shoulder groove-like portions in the tire circumferential direction are inclined in opposite directions.

The tire of the present invention has the above-described configuration, and can thus allow noise performance to be enhanced without degrading uneven wear resistance.

### BRIEF DESCRIPTION OF THE DRAWINGS

FIG. 1 is a development of a tread portion of a tire;
FIG. 2 is a partially enlarged view of a first shoulder land portion in FIG. 1;
FIG. 3 is a partially enlarged view of a second shoulder land portion in FIG. 1;
FIG. 4 is a development of a tread portion of a tire according to another embodiment of the present invention;
FIG. 5 is a development of a tread portion of a tire according to still another embodiment of the present invention;
FIG. 6 is a partially enlarged view of a first shoulder land portion in FIG. 5;
FIG. 7 is a partially enlarged view of a second shoulder land portion in FIG. 5;
FIG. 8 is a development of a tread portion of a tire of conventional example 1; and
FIG. 9 is a development of a tread portion of a tire of conventional example 2.

### DETAILED DESCRIPTION

Embodiments of the present invention will be described below with reference to the drawings. It is to be understood that the drawings include exaggerated expressions and that the dimensional ratios are expressed so as to be different from those of the actual structure in order to aid in understanding of the present invention. The same or common components are denoted by the same reference characters throughout the embodiments of the present invention, and repeated description is omitted.

### [Tire (First embodiment of the present invention)]

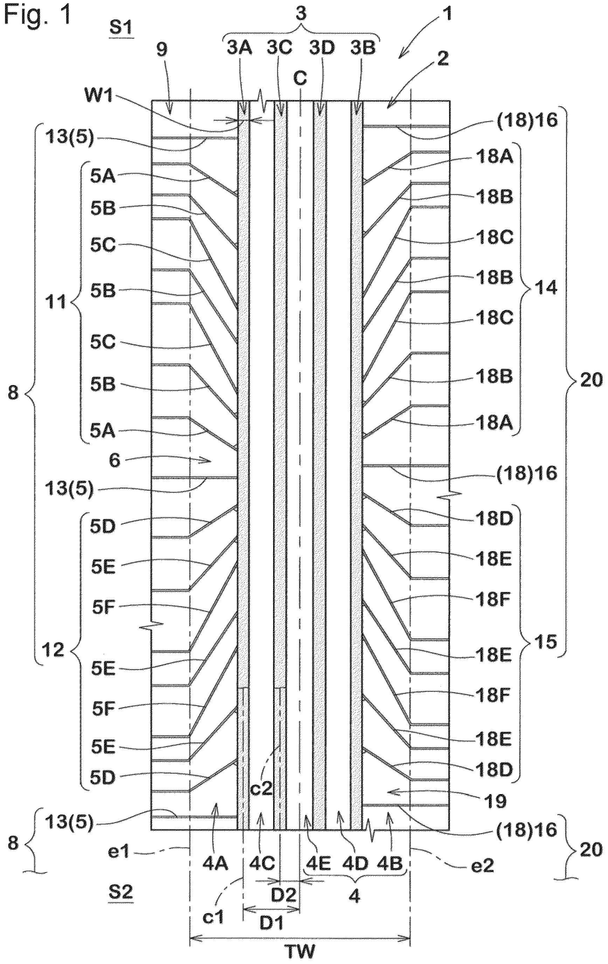

FIG. 1 is a development of a tread portion 2 of a tire 1 according to the present embodiment of the invention. In order to facilitate understanding of the present invention, circumferential grooves 3 and the like are colored in the drawings for the description herein. In the present embodiment of the invention, the tire 1 is, for example, preferably used as a pneumatic tire for a passenger car.

As shown in FIG. 1, in the present embodiment of the invention, the tire 1 has the tread portion 2. The tread portion 2 includes a first tread ground contact end e1 on one side in the tire axial direction and a second tread ground contact end e2 on the other side in the tire axial direction.

The first tread ground contact end e1 and the second tread ground contact end e2 are specified as the outermost ground contact positions in the tire axial direction when a normal load is applied to the tire 1 in a normal state and the tire is brought into contact with a plane at a camber angle of 0° in a case where the tire 1 is a pneumatic tire.

The normal state represents a state in which the tire 1 is mounted on a normal rim and is inflated to a normal internal pressure and no load is applied to the tire 1. In the description herein, unless otherwise specified, dimensions and the like of components of the tire are represented as values measured in the normal state.

The "normal rim" represents a rim that is defined by a standard, in a standard system including the standard on which the tire 1 is based, for each tire. Thus, examples of the normal rim include "standard rim" in the JATMA standard, "Design Rim" in the TRA standard, and "Measuring Rim" in the ETRTO standard.

The "normal internal pressure" represents an air pressure that is defined by a standard, in a standard system including the standard on which the tire 1 is based, for each tire. Thus, examples of the normal internal pressure include "maximum air pressure" in the JATMA standard, the maximum value recited in the table "TIRE LOAD LIMITS AT VARIOUS COLD INFLATION PRESSURES" in the TRA standard, and "INFLATION PRESSURE" in the ETRTO standard.

The "normal load" represents a load that is defined by a standard, in a standard system including the standard on which the tire 1 is based, for each tire. Thus, examples of the normal load include "maximum load capacity" in the JATMA standard, the maximum value recited in the table "TIRE LOAD LIMITS AT VARIOUS COLD INFLATION PRESSURES" in the TRA standard, and "LOAD CAPACITY" in the ETRTO standard.

### [Circumferential groove]

In the tread portion 2 of the present embodiment of the invention, a plurality of circumferential grooves 3 extends continuously in the tire circumferential direction. The circumferential grooves 3 allow water on a road surface to be smoothly discharged and allow resistance to hydroplaning to be enhanced during running on a wet road surface. A groove width W1 and a groove depth (not shown) of each circumferential groove 3 can be set as appropriate. The groove width W1 can be set to be 4.0% to 8.0% of a tread width TW. The groove depth is, for example, 5.0 to 10.0 mm.

In the present embodiment of the invention, the tread portion 2 has four circumferential grooves 3 formed therein. Thus, five land portions 4 are demarcated in the tread portion 2.

In the present embodiment of the invention, the circumferential grooves 3 include a first shoulder circumferential groove 3A, a second shoulder circumferential groove 3B, a first center circumferential groove 3C, and a second center circumferential groove 3D.

The first shoulder circumferential groove 3A is disposed closest to the first tread ground contact end e1 as compared with the other circumferential grooves 3. The second shoulder circumferential groove 3B is disposed closest to the second tread ground contact end e2 as compared with the other circumferential grooves 3. A distance D1 from a tire equator C to a groove center line c1 of each of the first shoulder circumferential groove 3A and the second shoulder circumferential groove 3B is, for example, 20% to 25% of the tread width TW.

The first center circumferential groove 3C is disposed between the first shoulder circumferential groove 3A and the tire equator C. The second center circumferential groove 3D is disposed between the second shoulder circumferential groove 3B and the tire equator C. A distance D2 from the tire equator C to a groove center line c2 of each of the first center circumferential groove 3C and the second center circumferential groove 3D is, for example, 6% to 15% of the tread width TW.

### [Land portion]

In the present embodiment of the invention, the land portions 4 include a first shoulder land portion 4A and a second shoulder land portion 4B. The first shoulder land portion 4A is demarcated to be disposed outwardly of the first shoulder circumferential groove 3A in the tire axial direction. Meanwhile, the second shoulder land portion 4B is demarcated to be disposed outwardly of the second shoulder circumferential groove 3B in the tire axial direction.

In the present embodiment of the invention, the land portions 4 include a first middle land portion 4C, a second middle land portion 4D, and a center land portion 4E. The first middle land portion 4C is demarcated between the first shoulder circumferential groove 3A and the first center circumferential groove 3C. The second middle land portion 4D is demarcated between the second shoulder circumferential groove 3B and the second center circumferential groove 3D. The center land portion 4E is demarcated between the first center circumferential groove 3C and the second center circumferential groove 3D.

In the present embodiment of the invention, the first middle land portion 4C, the second middle land portion 4D, and the center land portion 4E are formed as straight ribs extending linearly in the tire circumferential direction. In the present embodiment of the invention, in each of the first middle land portion 4C, the second middle land portion 4D, and the center land portion 4E, although lateral grooves (not shown) and sipes (not shown) extending so as to intersect the circumferential grooves 3 are not disposed, lateral grooves and sipes may be disposed as appropriate.

### [First shoulder land portion]

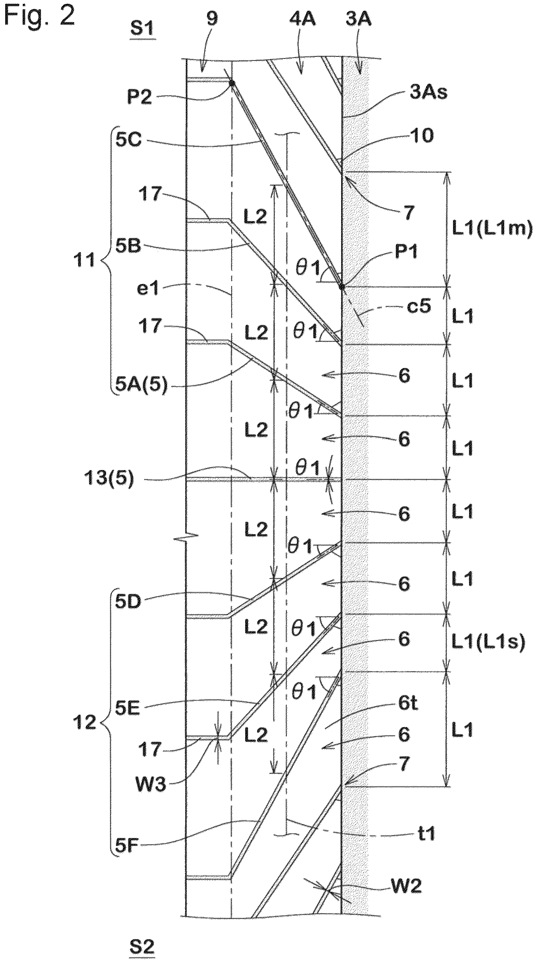

FIG. 2 is a partially enlarged view of the first shoulder land portion 4A. In the present embodiment of the invention, the first shoulder land portion 4A is formed as a straight rib extending linearly in the tire circumferential direction. A plurality of first shoulder groove-like portions 5 extending from the first shoulder circumferential groove 3A to the first tread ground contact end e1 is disposed in the first shoulder land portion 4A. Thus, the first shoulder land portion 4A has a plurality of first shoulder blocks 6 demarcated by the plurality of first shoulder groove-like portions 5.

### [First shoulder groove-like portion]

In the present embodiment of the invention, each of the plurality of first shoulder groove-like portions 5 is formed as a sipe having a groove width W2 of not greater than 1.0 mm. Thus, in the tire 1 of the present embodiment of the invention, wall surfaces, on both sides, of each first shoulder groove-like portion 5 support each other during running, thereby reducing difference in stiffness, in the front-rear direction, of the first shoulder land portion 4A. Thus, noise performance is enhanced without degrading uneven wear resistance. The groove width W2 is preferably not greater than 0.8 mm and more preferably not greater than 0.6 mm. The depth (not shown) of the first shoulder groove-like portion 5 can be set to be, for example, 5.0 to 7.0 mm.

In the present embodiment of the invention, the first shoulder groove-like portion 5 extends linearly from the first shoulder circumferential groove 3A to the first tread ground contact end e1. The first shoulder groove-like portion 5 may be bent or curved.

Among the plurality of first shoulder groove-like portions 5, a pair of first shoulder groove-like portions 5, 5 adjacent to each other in the tire circumferential direction have different angles θ1 relative to the tire axial direction. In the description herein, when the angle θ1 represents inclination to one side S1 in the tire circumferential direction from the inner side toward the outer side in the tire axial direction, the angle θ1 is specified as indicating a positive value.

In the present embodiment of the invention, the angle θ1 is specified on a straight line (in this example, groove center line c5) connecting between a first intersection point P1 of the first shoulder groove-like portion 5 and the first shoulder circumferential groove 3A and a second intersection point P2 of the first shoulder groove-like portion 5 and the first tread ground contact end e1. The first intersection point P1 is specified as a position at which the groove center line c5 of the first shoulder groove-like portion 5 and a groove edge 3As of the first shoulder circumferential groove 3A intersect each other. The second intersection point P2 is specified as a position at which the groove center line c5 of the first shoulder groove-like portion 5 and the first tread ground contact end e1 intersect each other.

The plurality of first shoulder groove-like portions 5 includes a plurality of kinds of first shoulder groove-like portions 5 that have different first pitch lengths L1 each representing a pitch length in the tire circumferential direction at a connecting portion 7 to the first shoulder circumferential groove 3A. Thus, the first shoulder land portion 4A includes a plurality of kinds of first shoulder blocks 6 having different lengths in the tire circumferential direction on the first shoulder circumferential groove 3A side on which ground contact pressure is relatively high during running. The connecting portion 7 is specified at the first intersection point P1 described above.

Thus, in the tire 1 of the present embodiment of the invention, the pair of first shoulder groove-like portions 5, 5 adjacent to each other in the tire circumferential direction have the different angles θ1, and, furthermore, a plurality of kinds of the first shoulder groove-like portions 5 having the different first pitch lengths L1 is disposed. Thus, the angle θ1 of the first shoulder groove-like portion 5 and ground contact end shapes of the first shoulder block 6 on both sides in the tire circumferential direction constantly vary in the tire circumferential direction. Therefore, impact sound generated when the first shoulder land portion 4A (first shoulder block 6) comes into contact with the ground can have various loudness including a higher sound and a lower sound during running on a road surface. Therefore, a frequency of pitch sound is dispersed, so that noise performance is enhanced.

In the present embodiment of the invention, the maximum value L1m of the first pitch length L1 is set to be 1.2 to 1.5 times the average of the first pitch lengths L1. In a case where the maximum value L1m is set to be not less than 1.2 times the average of the first pitch lengths L 1, the plurality of first shoulder groove-like portions 5 includes a first shoulder groove-like portion 5 having a great first pitch length L 1. Thus, a frequency of pitch sound is effectively dispersed, so that a density of a power value of sound can be reduced. Thus, noise performance is enhanced. Meanwhile, in a case where the maximum value L1m is set to be not greater than 1.5 times the average of the first pitch lengths L1, the plurality of first shoulder groove-like portions 5 can be prevented from including a first shoulder groove-like portion 5 having the first pitch length L1 that is greater than required. Thus, excessive increase of difference in stiffness, in the front-rear direction, of the first shoulder land portion 4A (first shoulder block 6) is prevented, so that uneven wear resistance is maintained. From such a viewpoint, the maximum value L1m is preferably not less than 1.3 times the average of the first pitch lengths L1 and preferably not greater than 1.4 times the average thereof. The average of the first pitch lengths L1 is obtained by dividing the sum of all kinds of the first pitch lengths L1 by the number of the kinds.

Meanwhile, the minimum value L1s of the first pitch length L1 is preferably set to be 0.5 to 0.8 times the average of the first pitch lengths L1. In a case where the minimum value L1s is set to be not greater than 0.8 times the average of the first pitch lengths L1, the plurality of first shoulder groove-like portions 5 includes a first shoulder groove-like portion 5 having a small first pitch length L1. Thus, a frequency of pitch sound is more effectively dispersed, so that a density of a power value of sound can be reduced. Therefore, noise performance is enhanced. Meanwhile, in a case where the minimum value L1s is set to be not less than 0.5 times the average of the first pitch lengths L 1, the plurality of first shoulder groove-like portions 5 can be prevented from including a first shoulder groove-like portion 5 having the first pitch length L1 that is less than required. Thus, difference in stiffness, in the front-rear direction, of the first shoulder land portion 4A (first shoulder block 6) is reduced to be small, so that uneven wear resistance is maintained. From such a viewpoint, the minimum value L1s is preferably not less than 0.6 times the average of the first pitch lengths L1 and preferably not greater than 0.7 times the average thereof.

The angles θ1 of the plurality of first shoulder groove-like portions 5 are preferably set to be -70 to 70°. Thus, a range of the angle θ1 that can be taken by each first shoulder groove-like portion 5 can be increased, so that a frequency of pitch sound can be effectively dispersed. Furthermore, near the connecting portion 7 between the first shoulder groove-like portion 5 and the first shoulder circumferential groove 3A, the first shoulder land portion 4A is inhibited from having a portion that is more acute than required, and uneven wear resistance is maintained. From such a viewpoint, the angle Θ1 is more preferably -65 to 65°. In a portion, of the first shoulder land portion 4A, which is sharpened so as to form an acute angle near the connecting portion 7, a chamfered portion 10 for reducing uneven wear may be formed.

### [First unit]

As shown in FIG. 1, in the first shoulder land portion 4A of the present embodiment of the invention, a plurality of first units 8 each formed of a part of the first shoulder groove-like portions 5 among the plurality of first shoulder groove-like portions 5 are aligned in the tire circumferential direction. Thus, in the first shoulder land portion 4A, a pattern in which the plurality of first shoulder groove-like portions 5 are spaced in the tire circumferential direction is formed. The number of the first shoulder groove-like portions 5, the angles θ1 (shown in FIG. 2) thereof, and the first pitch lengths L1 (shown in FIG. 2) thereof may be uniform among the first units 8 or may be different among the first units 8.

As shown in FIG. 1 and FIG. 2, in the present embodiment of the invention, the first unit 8 is formed of a first portion 11 in which the first shoulder groove-like portions 5 that have the angles θ1 (shown in FIG. 2) indicating positive values are continuously disposed, and a second portion 12 in which the first shoulder groove-like portions that have the angles θ1 indicating negative values are continuously disposed.

In order to effectively exhibit the effect, the angle θ1 of the first shoulder groove-like portions 5 of each of the first portion 11 and the second portion 12 preferably varies continuously in the tire circumferential direction between the angle maximum value and the angle minimum value (for example, -70 to 70°). Thus, in the first unit 8 (first shoulder land portion 4A), pitch sounds having different frequencies are continuously generated, so that noise performance is enhanced. In the present embodiment of the invention, although the first portion 11 is disposed on the one side S1 in the tire circumferential direction relative to the second portion 12, the first portion 11 may be disposed on the other side S2 in the tire circumferential direction relative to the second portion 12.

### [First portion]

In the first portion 11, the first shoulder groove-like portions 5 that have the angles θ1 indicating positive values are spaced in the tire circumferential direction (that is, inclined to the one side S1 in the tire circumferential direction from the inner side toward the outer side in the tire axial direction). As shown in FIG. 2, in the present embodiment of the invention, the first portion 11 includes three kinds of the first shoulder groove-like portions 5 (first groove-like portion 5A, second groove-like portion 5B, and third groove-like portion 5C) having different angles θ1.

As shown in FIG. 2, in the present embodiment of the invention, the first groove-like portion 5A is the first shoulder groove-like portion 5 that has the angle θ1 indicating the smallest value in the first portion 11. The third groove-like portion 5C is the first shoulder groove-like portion 5 that has the angle θ1 indicating the greatest value in the first portion 11. The second groove-like portion 5B is the first shoulder groove-like portion 5 having the angle θ1 that is greater than the angle θ1 of the first groove-like portion 5A and less than the angle θ1 of the third groove-like portion 5C.

As shown in FIG. 1, in the first portion 11 of the present embodiment of the invention, the first groove-like portion 5A, the second groove-like portion 5B, and the third groove-like portion 5C are sequentially disposed from the one side S1 toward the other side S2 in the tire circumferential direction. Thus, in the first portion 11, the angle θ1 (shown in FIG. 2) of the first shoulder groove-like portion 5 can be gradually increased from the one side S1 toward the other side S2 in the tire circumferential direction. In the first portion 11 having such a structure, a frequency of pitch sound is effectively dispersed and noise performance is enhanced. Furthermore, change of stiffness, in the front-rear direction, of the first shoulder land portion 4A (first shoulder block 6) becomes gentle and uneven wear resistance is maintained.

As shown in FIG. 1 and FIG. 2, in the first portion 11 of the present embodiment of the invention, the first groove-like portion 5A, the second groove-like portion 5B, and the third groove-like portion 5C are sequentially disposed from the other side S2 toward the one side S 1 in the tire circumferential direction. Thus, in the first portion 11, the angle θ1 of the first shoulder groove-like portion 5 can be gradually increased from the other side S2 toward the one side S1 in the tire circumferential direction, whereby noise performance is enhanced without degrading uneven wear resistance.

As shown in FIG. 1, in the first portion 11, the second groove-like portion 5B is disposed between the paired third groove-like portions 5C and 5C adjacent to each other in the tire circumferential direction. Thus, in the first portion 11, change of stiffness in the front-rear direction becomes gentle, and uneven wear resistance is maintained.

### [Second portion]

As shown in FIG. 1 and FIG. 2, in the second portion 12, the first shoulder groove-like portions 5 that have the angles θ1 indicating negative values are spaced in the tire circumferential direction (that is, inclined to the other side S2 in the tire circumferential direction from the inner side toward the outer side in the tire axial direction) In the present embodiment of the invention, the second portion 12 includes three kinds of the first shoulder groove-like portions 5 (fourth groove-like portion 5D, fifth groove-like portion 5E, and sixth groove-like portion 5F) having different angles θ1.

As shown in FIG. 2, in the present embodiment of the invention, the fourth groove-like portion 5D is the first shoulder groove-like portion 5 that has the angle θ1 indicating the greatest value in the second portion 12 in which the angle θ1 indicates a negative value. The sixth groove-like portion 5F is the first shoulder groove-like portion 5 that has the angle θ1 indicating the smallest value in the second portion 12. The fifth groove-like portion 5E is the first shoulder groove-like portion 5 having the angle θ1 that is less than the angle θ1 of the fourth groove-like portion 5D and greater than the angle θ1 of the sixth groove-like portion 5F.

As shown in FIG. 1, in the second portion 12 of the present embodiment of the invention, the fourth groove-like portion 5D, the fifth groove-like portion 5E, and the sixth groove-like portion 5F are sequentially disposed from the one side S1 toward the other side S2 in the tire circumferential direction. Thus, in the second portion 12, the angle θ1 of the first shoulder groove-like portion 5 can be gradually reduced from the one side S1 toward the other side S2 in the tire circumferential direction. In the second portion 12 having such a structure, a frequency of pitch sound is effectively dispersed, and noise performance is enhanced. Furthermore, change of stiffness, in the front-rear direction, of the first shoulder land portion 4A (first shoulder block 6) becomes gentle, and uneven wear resistance is maintained.

As shown in FIG. 1 and FIG. 2, in the second portion 12 of the present embodiment of the invention, the fourth groove-like portion 5D, the fifth groove-like portion 5E, and the sixth groove-like portion 5F are sequentially disposed from the other side S2 toward the one side S1 in the tire circumferential direction. Thus, in the second portion 12, the angle θ1 of the first shoulder groove-like portion 5 can be gradually increased from the other side S2 toward the one side S1 in the tire circumferential direction, whereby noise performance is enhanced without degrading uneven wear resistance.

In FIG. 1, in the second portion 12, the fifth groove-like portion 5E is disposed between the paired sixth groove-like portions 5F and 5F adjacent to each other in the tire circumferential direction. Thus, in the second portion 12, change of stiffness in the front-rear direction becomes gentle, and uneven wear resistance is maintained.

### [Third portion]

As shown in FIG. 2, in the present embodiment of the invention, the first unit 8 further includes a third portion 13 including the first shoulder groove-like portion 5 that has the angle θ1 indicating zero. In the third portion 13 having such a structure, pitch sound having a frequency different from those in the first portion 11 and the second portion 12 is generated, so that noise performance is enhanced. In the present embodiment of the invention, although the third portion 13 is formed of one first shoulder groove-like portion 5, the third portion 13 may be formed of two or more first shoulder groove-like portions 5.

In the present embodiment of the invention, the third portion 13 is disposed between the first portion 11 and the second portion 12. Thus, in the first unit 8, the third groove-like portion 5C, the second groove-like portion 5B, the first groove-like portion 5A, the third portion 13, the fourth groove-like portion 5D, the fifth groove-like portion 5E, and the sixth groove-like portion 5F are sequentially disposed from the one side S1 toward the other side S2 in the tire circumferential direction. Thus, in the present embodiment of the invention, the angle θ1 (shown in FIG. 2) of the first shoulder groove-like portion 5 is continuously changed (gradually reduced) from the one side S1 toward the other side S2 in the tire circumferential direction, and a frequency of pitch sound is effectively dispersed, and noise performance is enhanced. Furthermore, change of stiffness, in the front-rear direction, of the first shoulder land portion 4A (first shoulder block 6) becomes gentle, and uneven wear resistance is maintained.

As shown in FIG. 1, the third portion 13 (first shoulder groove-like portion 5 at which the angle θ1 indicates zero) of the present embodiment of the invention is disposed on the one side S1 in the tire circumferential direction relative to the first groove-like portion 5A (first shoulder groove-like portion 5 that has the angle θ1 indicating the smallest value) of the first portion 11. Thus, in the first unit 8, change of stiffness, in the front-rear direction, of the first shoulder land portion 4A (first shoulder block 6) becomes gentle, and uneven wear resistance is maintained.

### [Protruding portion]

As shown in FIG. 2, in the present embodiment of the invention, the plurality of first shoulder groove-like portions 5 each include a protruding portion 17 extending outwardly from the first tread ground contact end e1 in the tire axial direction. In the present embodiment of the invention, the protruding portion 17 is also formed as a sipe having the maximum groove width W3 of not greater than 1.0 mm. Thus, in the tire 1 of the present embodiment of the invention, stiffness in the tire circumferential direction is maintained at a buttress portion 9 that comes into contact with the ground during cornering, and steering sound is inhibited from becoming worse. Thus, in the tire 1 of the present embodiment of the invention, noise performance (steering noise performance) is enhanced.

### [First shoulder block]

The first shoulder blocks 6 of the present embodiment of the invention are demarcated by the first shoulder circumferential groove 3A, the first tread ground contact end e1, and the plurality of first shoulder groove-like portions 5, and each form a trapezoidal tread surface 6t.

At the center position 11, in the tire axial direction, of the first shoulder land portion 4A, a second pitch length L2 that is a pitch length, in the tire circumferential direction, for the plurality of first shoulder groove-like portions 5 is substantially constant. In the description herein, "substantially constant" means that the second pitch length L2 is constant in consideration of, for example, a molding error generated when the tire 1 is obtained by vulcanization-molding in a mold. Therefore, in a case where a ratio obtained by dividing the smallest second pitch length L2 by the greatest second pitch length L2 is in a range of 0.95 to 1.00, the second pitch length L2 may be considered to be substantially constant. The second pitch length L2 is specified at an intersection point of the center position t1 and the groove center line c5 of the first shoulder groove-like portion 5.

Thus, in the present embodiment of the invention, the second pitch length L2 is set to be substantially constant, whereby difference in stiffness, in the front-rear direction, of each first shoulder block 6 can be reduced while the first pitch lengths L1 are made different. Thus, uneven wear resistance is maintained.

In order to effectively exhibit the effect, an area of the tread surface 6t of the first shoulder block 6 is preferably set to be substantially equal among the plurality of first shoulder blocks 6. Thus, the rubber volume becomes almost uniform among the first shoulder blocks 6, and difference in stiffness, in the front-rear direction, of the first shoulder land portion 4A is reduced, so that uneven wear resistance is maintained. In the description herein, "substantially equal" means that the area is equal in consideration of, for example, a molding error generated when the tire 1 is obtained by vulcanization-molding in a mold. Therefore, in a case where a ratio obtained by dividing the smallest value of an area of the tread surface 6t by the greatest value of an area of the tread surface 6t, among the tread surfaces 6t of all the first shoulder blocks 6, is in a range of 0.95 to 1.00, the areas of the tread surfaces 6t may be considered to be substantially equal to each other.

### [Second shoulder land portion]

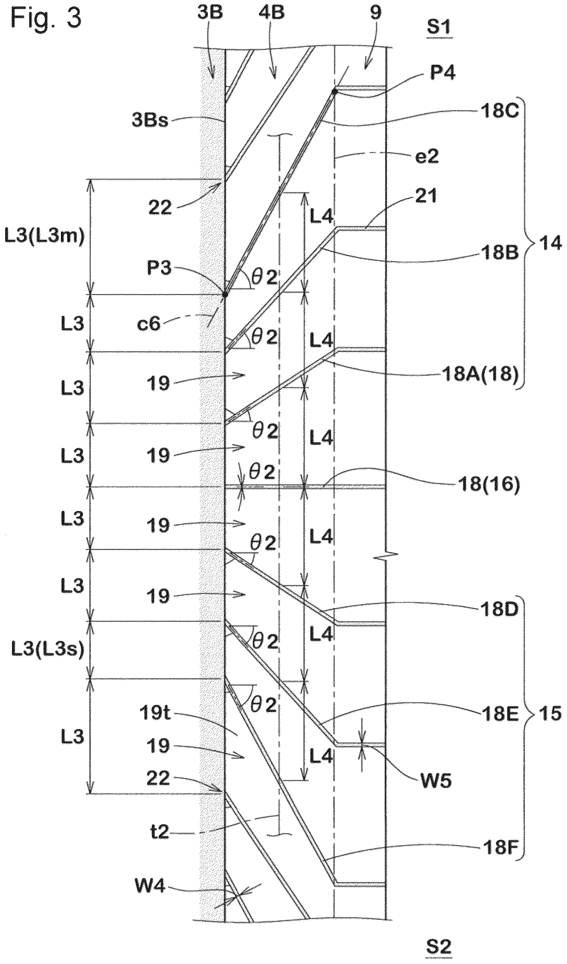

FIG. 3 is a partially enlarged view of the second shoulder land portion 4B in FIG. 1. In the present embodiment of the invention, the second shoulder land portion 4B is formed as a straight rib extending linearly in the tire circumferential direction. A plurality of second shoulder groove-like portions 18 extending from the second shoulder circumferential groove 3B to the second tread ground contact end e2 is disposed in the second shoulder land portion 4B. Thus, the second shoulder land portion 4B has a plurality of second shoulder blocks 19 demarcated by the plurality of second shoulder groove-like portions 18.

### [Second shoulder groove-like portion]

In the present embodiment of the invention, each of the plurality of second shoulder groove-like portions 18 is formed as a sipe having a groove width W4 of not greater than 1.0 mm, similarly to the first shoulder groove-like portion 5. Thus, uneven wear resistance is maintained. In the present embodiment of the invention, although the second shoulder groove-like portion 18 extends linearly from the second shoulder circumferential groove 3B to the second tread ground contact end e2, the second shoulder groove-like portion 18 may be bent or curved.

Among the plurality of second shoulder groove-like portions 18, a pair of second shoulder groove-like portions 18, 18 adjacent to each other in the tire circumferential direction have different angles Θ2 relative to the tire axial direction. In the description herein, when the angle θ2 represents inclination to the one side S1 in the tire circumferential direction from the inner side toward the outer side in the tire axial direction, the angle θ2 is specified as indicating a positive value.

In the present embodiment of the invention, the angle θ2 is specified on a straight line (in this example, groove center line c6) connecting between a third intersection point P3 of the second shoulder groove-like portion 18 and the second shoulder circumferential groove 3B, and a fourth intersection point P4 of the second shoulder groove-like portion 18 and the second tread ground contact end e2. The third intersection point P3 is specified as an intersection point of the groove center line c6 of the second shoulder groove-like portion 18 and a groove edge 3Bs of the second shoulder circumferential groove 3B. The fourth intersection point P4 is specified as an intersection point of the groove center line c6 of the second shoulder groove-like portion 18 and the second tread ground contact end e2.

The plurality of second shoulder groove-like portions 18 includes a plurality of kinds of second shoulder groove-like portions 18 that have different third pitch lengths L3 each representing a pitch length in the tire circumferential direction at a connecting portion 22 to the second shoulder circumferential groove 3B. Thus, the second shoulder land portion 4B includes a plurality of kinds of second shoulder blocks 19 having different lengths in the tire circumferential direction on the second shoulder circumferential groove 3B side on which ground contact pressure is relatively high during running. The connecting portion 22 is specified at the third intersection point P3 described above.

Thus, in the tire 1 of the present embodiment of the invention, the pair of second shoulder groove-like portions 18, 18 adjacent to each other in the tire circumferential direction have the different angles Θ2, and, furthermore, a plurality of kinds of the second shoulder groove-like portions 18 having the different third pitch lengths L3 is disposed. Thus, impact sound generated when the second shoulder land portion 4B (second shoulder block 19) comes into contact with the ground has various loudness including a higher sound and a lower sound during running on a road surface. Therefore, a frequency of pitch sound is dispersed, so that noise performance is enhanced.

In the present embodiment of the invention, from the same viewpoint as for the above-described first pitch length L1 (shown in FIG. 2), the maximum value L3m of the third pitch length L3 is preferably set to be 1.2 to 1.5 times (more preferably 1.3 to 1.4 times) the average of the third pitch lengths L3. Furthermore, the minimum value L3s of the third pitch length L3 is preferably set to be 0.5 to 0.8 times (more preferably 0.6 to 0.7 times) the average of the third pitch lengths L3.

The angles θ2 of the plurality of the second shoulder groove-like portions 18 are preferably set to be -70 to 70° (more preferably, -65 to 65°) from the same viewpoint as for the angles θ1 (shown in FIG. 2) of the first shoulder groove-like portions 5 as described above.

As shown in FIG. 1, in the present embodiment of the invention, the second shoulder groove-like portion 18 is inclined in the same direction as the first shoulder groove-like portion 5 closest to the second shoulder groove-like portion 18 in the tire circumferential direction. In the description herein, "closest in the tire circumferential direction" means that a distance in the tire circumferential direction over which the second shoulder groove-like portion 18 at the third intersection point P3 (shown in FIG. 3) and the first shoulder groove-like portion 5 at the first intersection point P1 (shown in FIG. 2) are distant from each other, is the smallest.

In the present embodiment of the invention, all of the second shoulder groove-like portions 18 and the first shoulder groove-like portions 5 adjacent thereto are inclined in the same direction.

In the present embodiment of the invention, the second shoulder groove-like portion 18 (for example, seventh groove-like portion 18A) that has the angle θ2 (shown in FIG. 3) indicating a positive value and the first shoulder groove-like portion 5 (for example, the first groove-like portion 5A) that has the angle θ1 (shown in FIG. 2) indicating a positive value are closest to each other in the tire circumferential direction. Similarly, the second shoulder groove-like portion 18 (for example, tenth groove-like portion 18D) that has the angle θ2 indicating a negative value and the first shoulder groove-like portion 5 (for example, fourth groove-like portion 5D) that has the angle θ1 indicating a negative value are closest to each other in the tire circumferential direction. In the present embodiment of the invention, the second shoulder groove-like portion 18 that has the angle θ2 indicating zero and the first shoulder groove-like portion 5 that has the angle θ1 indicating zero are closest to each other in the tire circumferential direction.

Thus, in the present embodiment of the invention, the first shoulder groove-like portion 5 and the second shoulder groove-like portion 18 closest to each other in the tire circumferential direction are inclined in the same direction, so that difference between stiffness, in the front-rear direction, of the first shoulder land portion 4A and stiffness, in the front-rear direction, of the second shoulder land portion 4B is reduced to be small. Thus, uneven wear resistance is maintained.

In order to effectively maintain uneven wear resistance, the angle θ1 (shown in FIG. 2) and the angle θ2 (shown in FIG. 3) of the first shoulder groove-like portion 5 and the second shoulder groove-like portion 18, respectively, closest to each other may be set to be substantially equal to each other. Thus, difference between stiffness, in the front-rear direction, of the first shoulder land portion 4A and stiffness, in the front-rear direction, of the second shoulder land portion 4B is further reduced to be small, and uneven wear resistance is maintained. "Substantially equal to each other" means that the angle θ1 and the angle θ2 are equal to each other in consideration of, for example, the above-described molding error, and, in a case where a ratio θ1/θ2 between the angles is in a range of 0.95 to 1.05, the angle θ1 and the angle θ2 may be considered to be substantially equal to each other.

The first pitch length L1 (shown in FIG. 2) and the third pitch length L3 (shown in FIG. 3) of the first shoulder groove-like portion 5 and the second shoulder groove-like portion 18, respectively, closest to each other may be set to be substantially equal to each other. Thus, the areas of the tread surfaces of the first shoulder block 6 and the second shoulder block 19 adjacent to each other in the tire axial direction can be made almost equal to each other. Therefore, difference between stiffness, in the front-rear direction, of the first shoulder land portion 4A and stiffness, in the front-rear direction, of the second shoulder land portion 4B can be further reduced to be small, and uneven wear resistance is maintained. "Substantially equal to each other" means that the first pitch length L1 and the third pitch length L3 may be considered to be substantially equal to each other in a case where a ratio L1/L3 between the pitch lengths is in a range of 0.95 to 1.05.

### [Second unit]

As shown in FIG. 1, in the second shoulder land portion 4B of the present embodiment of the invention, a plurality of second units 20 each formed of a part of the second shoulder groove-like portions 18 among the plurality of second shoulder groove-like portions 18 are aligned in the tire circumferential direction. Thus, in the second shoulder land portion 4B, a pattern in which the plurality of second shoulder groove-like portions 18 are spaced in the tire circumferential direction is formed. The number of the second shoulder groove-like portions 18, the angles θ2 (shown in FIG. 3) thereof, and the third pitch lengths L3 (shown in FIG. 3) thereof may be uniform among the second units 20 or may be different among the second units 20.

As shown in FIG. 1 and FIG. 3, the second unit 20 is formed of a fourth portion 14 in which the second shoulder groove-like portions 18 that have the angles θ2 (shown in FIG. 3) indicating positive values are continuously disposed, and a fifth portion 15 in which the second shoulder groove-like portions that have the angles θ2 indicating negative values are continuously disposed. Thus, in the second unit 20, a frequency of pitch sound is different between the fourth portion 14 and the fifth portion 15, and noise performance is enhanced. In order to effectively exhibit such an effect, the angle θ2 of the second shoulder groove-like portion 18 of each of the fourth portion 14 and the fifth portion 15 preferably varies continuously between the angle maximum value and the angle minimum value (for example, -70 to 70°).

### [Fourth portion]

In the fourth portion 14, the second shoulder groove-like portions 18 that have the angles θ2 indicating positive values are spaced in the tire circumferential direction (that is, inclined to the one side S1 in the tire circumferential direction from the inner side toward the outer side in the tire axial direction). As shown in FIG. 3, in the present embodiment of the invention, the fourth portion 14 includes three kinds of the second shoulder groove-like portions 18 (seventh groove-like portion 18A, eighth groove-like portion 18B, and ninth groove-like portion 18C) having different angles θ2.

As shown in FIG. 3, in the present embodiment of the invention, the seventh groove-like portion 18A is the second shoulder groove-like portion 18 that has the angle θ2 indicating the smallest value in the fourth portion 14. The ninth groove-like portion 18C is the second shoulder groove-like portion 18 that has the angle θ2 indicating the greatest value in the fourth portion 14. The eighth groove-like portion 18B is the second shoulder groove-like portion 18 having the angle θ2 that is greater than the angle θ2 of the seventh groove-like portion 18A and less than the angle θ2 of the ninth groove-like portion 18C.

As shown in FIG. 1, in the fourth portion 14 of the present embodiment of the invention, the seventh groove-like portion 18A, the eighth groove-like portion 18B, and the ninth groove-like portion 18C are sequentially disposed from the one side S1 toward the other side S2 in the tire circumferential direction. Furthermore, in the fourth portion 14, the seventh groove-like portion 18A, the eighth groove-like portion 18B, and the ninth groove-like portion 18C are sequentially disposed from the other side S2 toward the one side S1 in the tire circumferential direction. Thus, in the fourth portion 14, while the angle θ2 of the second shoulder groove-like portion 18 is gradually increased from the one side S1 toward the other side S2 in the tire circumferential direction, the angle θ2 can be gradually increased from the other side S2 toward the one side S1. Therefore, in the present embodiment of the invention, noise performance is enhanced without degrading uneven wear resistance. In the fourth portion 14, the eighth groove-like portion 18B is disposed between the paired ninth groove-like portions 18C and 18C adjacent to each other in the tire circumferential direction, whereby change of stiffness in the front-rear direction becomes gentle, and uneven wear resistance is maintained.

### [Fifth portion]

As shown in FIG. 1 and FIG. 3, in the fifth portion 15, the second shoulder groove-like portions 18 that have the angles θ2 indicating negative values are spaced in the tire circumferential direction (that is, inclined to the other side S2 in the tire circumferential direction from the inner side toward the outer side in the tire axial direction). In the present embodiment of the invention, the fifth portion 15 includes three kinds of the second shoulder groove-like portions 18 (tenth groove-like portion 18D, eleventh groove-like portion 18E, and twelfth groove-like portion 18F) having different angles θ2.

As shown in FIG. 3, in the present embodiment of the invention, the tenth groove-like portion 18D is the second shoulder groove-like portion 18 that has the angle θ2 indicating the greatest value in the fifth portion 15. The twelfth groove-like portion 18F is the second shoulder groove-like portion 18 that has the angle θ2 indicating the smallest value in the fifth portion 15. The eleventh groove-like portion 18E is the second shoulder groove-like portion 18 having the angle θ2 that is less than the angle θ2 of the tenth groove-like portion 18D and greater than the angle θ2 of the twelfth groove-like portion 18F.

As shown in FIG. 1, in the fifth portion 15 of the present embodiment of the invention, the tenth groove-like portion 18D, the eleventh groove-like portion 18E, and the twelfth groove-like portion 18F are sequentially disposed from the one side S1 toward the other side S2 in the tire circumferential direction. Furthermore, in the fifth portion 15, the tenth groove-like portion 18D, the eleventh groove-like portion 18E, and the twelfth groove-like portion 18F are sequentially disposed from the other side S2 toward the one side S1 in the tire circumferential direction. Thus, in the fifth portion 15, while the angle θ2 of the second shoulder groove-like portion 18 is gradually reduced from the one side S1 toward the other side S2 in the tire circumferential direction, the angle θ2 can be gradually reduced from the other side S2 toward the one side S1. Therefore, in the present embodiment of the invention, noise performance is enhanced without degrading uneven wear resistance. In the fifth portion 15, the eleventh groove-like portion 18E is disposed between the paired twelfth groove-like portions 18F and 18F adjacent to each other in the tire circumferential direction, so that change of stiffness in the front-rear direction becomes gentle, and uneven wear resistance is maintained.

### [Sixth portion]

As shown in FIG. 3, in the present embodiment of the invention, the second unit 20 further includes a sixth portion 16 including the second shoulder groove-like portion 18 that has the angle Θ2 indicating zero. Therefore, pitch sound having a frequency different from those in the fourth portion 14 and the fifth portion 15 is generated, so that noise performance is enhanced. In the present embodiment of the invention, although the sixth portion 16 is formed of one second shoulder groove-like portion 18, the sixth portion 16 may be formed of two or more second shoulder groove-like portions 18.

In the present embodiment of the invention, the sixth portion 16 is disposed between the fourth portion 14 and the fifth portion 15. Thus, the ninth groove-like portion 18C, the eighth groove-like portion 18B, the seventh groove-like portion 18A, the sixth portion 16, the tenth groove-like portion 18D, the eleventh groove-like portion 18E, and the twelfth groove-like portion 18F are sequentially disposed from the one side S1 toward the other side S2 in the tire circumferential direction. Thus, in the present embodiment of the invention, the angle θ2 of the second shoulder groove-like portion 18 is continuously changed (gradually reduced) from the one side S1 toward the other side S2 in the tire circumferential direction, and a frequency of pitch sound is effectively dispersed. Therefore, noise performance is enhanced. Furthermore, change of stiffness, in the front-rear direction, of the second shoulder land portion 4B (second shoulder block 19) becomes gentle, and uneven wear resistance is maintained.

As shown in FIG. 1, in the present embodiment of the invention, the sixth portion 16 (second shoulder groove-like portion 18 that has the angle θ2 indicating zero) is disposed on the one side S1 in the tire circumferential direction relative to the seventh groove-like portion 18A (second shoulder groove-like portion 18 that has the angle θ2 indicating the smallest value) of the fourth portion 14. Thus, in the second unit 20, change of stiffness, in the front-rear direction, of the second shoulder land portion 4B (second shoulder block 19) becomes gentle, and uneven wear resistance is maintained.

### [Protruding portion]

As shown in FIG. 3, in the present embodiment of the invention, the plurality of second shoulder groove-like portions 18 each include a protruding portion 21 extending outwardly from the second tread ground contact end e2 in the tire axial direction. In the present embodiment of the invention, the protruding portion 21 is also formed as a sipe having the maximum groove width W5 of not greater than 1.0 mm, so that increase of steering sound is inhibited, and noise performance is enhanced.

### [Second shoulder block]

The second shoulder blocks 19 of the present embodiment of the invention are demarcated by the second shoulder circumferential groove 3B, the second tread ground contact end e2, and the plurality of the second shoulder groove-like portions 18, and each form a trapezoidal tread surface 19t.

At the center position t2, in the tire axial direction, of the second shoulder land portion 4B, a fourth pitch length L4 that is a pitch length, in the tire circumferential direction, for the plurality of second shoulder groove-like portions 18 is substantially constant. Thus, difference in stiffness, in the front-rear direction, of the second shoulder land portion 4B (second shoulder block 19) is reduced while the third pitch lengths L3 are different, so that uneven wear resistance is maintained. The fourth pitch length L4 is specified at the intersection point of the center position t2 and the groove center line c6 of the second shoulder groove-like portion 18.

An area of the tread surface 19t of the second shoulder block 19 is preferably set to be substantially equal among the plurality of second shoulder blocks 19. Thus, stiffness can be almost uniform among the second shoulder blocks 19, and, therefore, difference in stiffness, in the front-rear direction, of the second shoulder land portion 4B is reduced, so that uneven wear resistance is maintained.

### [Tire (second embodiment of the present invention)]

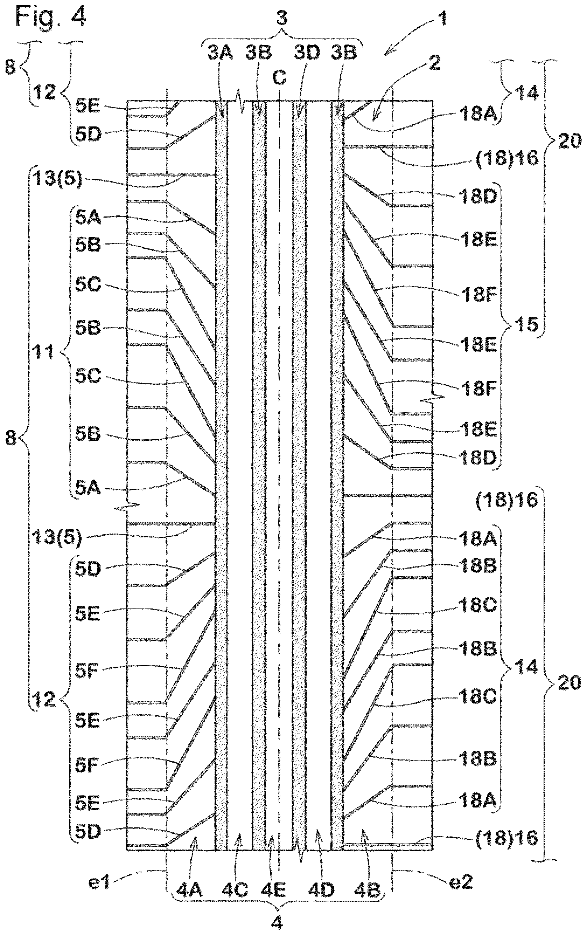

FIG. 4 is a development of the tread portion 2 of the tire 1 according to another embodiment of the present invention. In the present embodiment of the invention, the same components as those of the above-described embodiments are denoted by the same reference characters, and the description thereof may be omitted.

In the present embodiment of the invention, the second shoulder groove-like portion 18 and the first shoulder groove-like portion 5 closest thereto in the tire circumferential direction are inclined in opposite directions. In the present embodiment of the invention, a part of the second shoulder groove-like portions 18 among all of the second shoulder groove-like portions 18 and the first shoulder groove-like portions 5 adjacent thereto are inclined in opposite directions.

In the present embodiment of the invention, the second shoulder groove-like portion 18 (for example, the seventh groove-like portion 18A) that has the angle Θ2 (shown in FIG. 3) indicating a positive value and the first shoulder groove-like portion 5 (for example, the fourth groove-like portion 5D) that has the angle θ1 (shown in FIG. 2) indicating a negative value are closest to each other in the tire circumferential direction. Similarly, the second shoulder groove-like portion 18 (for example, the twelfth groove-like portion 18F) that has the angle Θ2 indicating a negative value and the first shoulder groove-like portion 5 (for example, the first groove-like portion 5A) that has the angle θ1 indicating a positive value are closest to each other in the tire circumferential direction.

Thus, in the present embodiment of the invention, the second shoulder groove-like portion 18 and the first shoulder groove-like portion 5 closest thereto in the tire circumferential direction are inclined in opposite directions, so that pitch sounds having different frequencies are generated in the first shoulder land portion 4A and the second shoulder land portion 4B. Thus, noise performance is enhanced.

### [Tire (third embodiment of the present invention)]

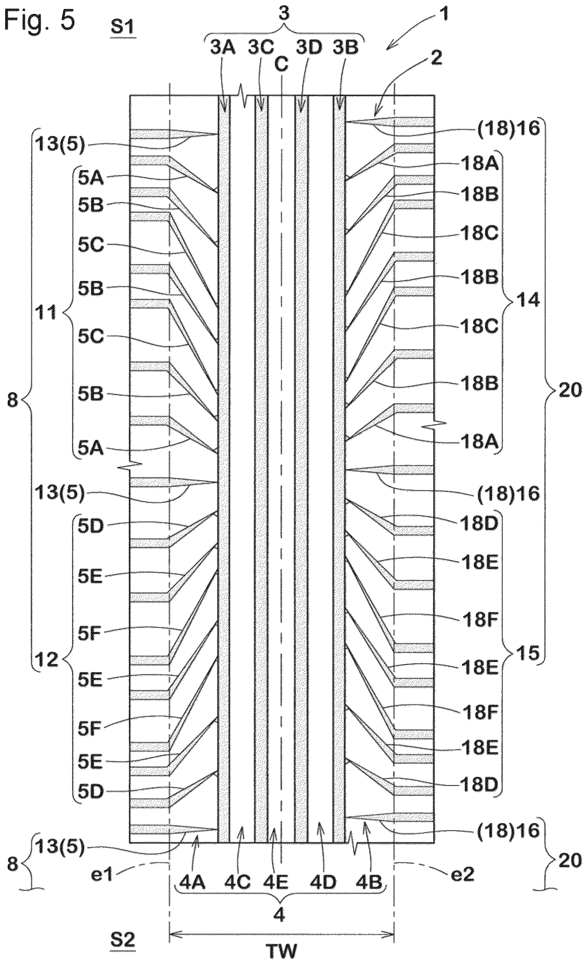

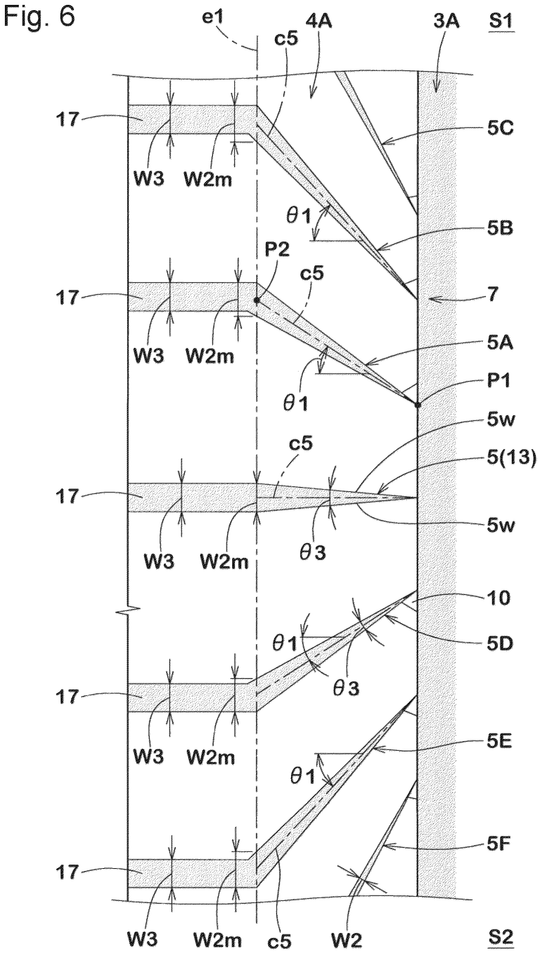

FIG. 5 is a development of the tread portion 2 of the tire 1 according to still another embodiment of the present invention. FIG. 6 is a partially enlarged view of the first shoulder land portion 4A in FIG. 5. In the present embodiment of the invention, the same components as those of the above-described embodiments are denoted by the same reference characters, and the description thereof may be omitted.

### [First shoulder groove-like portion (third embodiment)]

In the present embodiment of the invention, each of the plurality of first shoulder groove-like portions 5 is formed as a lateral groove in which the groove width W2 (maximum groove width W2m) shown in FIG. 6 is greater than 1.0 mm. The first shoulder groove-like portion 5 having such a structure allows water on a road surface to be discharged at the first shoulder land portion 4A during running on a wet road surface and allows resistance to hydroplaning to be enhanced. In order to effectively exhibit such an effect, the maximum value (maximum groove width W2m) of the groove width W2 can be set to be 2.0% to 5.0% of the tread width TW (shown in FIG. 5).

In the present embodiment of the invention, the groove width W2 is gradually increased from the first shoulder circumferential groove 3A toward the first tread ground contact end e1. Thus, the first shoulder groove-like portion 5 is formed in a wedge-like shape projecting inwardly in the tire axial direction. In the first shoulder groove-like portion 5 having such a structure, a groove volume is set to be relatively small on the inner side in the tire axial direction on which ground contact pressure tends to become relatively high at the first shoulder land portion 4A and coming-in and going-out of air tend to be relatively increased when the tire is in contact with the ground. Thus, air pumping sound is lowered at the first shoulder groove-like portion 5, and noise performance is enhanced. Therefore, in the present embodiment of the invention, noise performance is effectively enhanced through an effect of dispersing a frequency of pitch sound and an effect of lowering air pumping sound. Meanwhile, a groove volume is set to be relatively great on the outer side (first tread ground contact end e1 side) in the tire axial direction on which the influences of air pumping sound is small, whereby resistance to hydroplaning is enhanced.

In the first shoulder groove-like portion 5 that has the angle θ1 indicating a great value, the length along the groove center line c5 is increased as compared with the first shoulder groove-like portion 5 that has the angle θ1 indicating a small value. For example, in a case where the groove volume is set to be equal among the first shoulder groove-like portions 5, the groove width W2 of the first shoulder groove-like portion 5 (for example, the second groove-like portion 5B) that has the angle θ1 indicating a great value becomes less than the groove width W2 of the first shoulder groove-like portion 5 (for example, the first groove-like portion 5A) that has the angle θ1 indicating a small value. Therefore, drainage efficiency may not be maintained.

In order to enhance drainage efficiency, in the present embodiment of the invention, the plurality of first shoulder groove-like portions 5 is preferably set to have a groove volume increased in proportion to the angle θ1. As in the present embodiment of the invention, in a case where the first shoulder groove-like portion 5 that has the angle θ1 indicating a positive value and the first shoulder groove-like portion 5 that has the angle θ1 indicating a negative value are included, the groove volume is set to be increased in proportion to the absolute value of the angle θ1. In the present embodiment of the invention, the first shoulder groove-like portion 5 of the third portion 13 at which the angle θ1 indicates zero is set to have the smallest groove volume. Meanwhile, the third groove-like portion 5C and the sixth groove-like portion 5F having the greatest absolute values of the angle θ1 are each set to have the greatest groove volume.

Thus, in the present embodiment of the invention, the groove width W2 of the first shoulder groove-like portion 5 that has the angle θ1 (in this example, the absolute value of the angle θ1) indicating a great value is inhibited from being reduced, and resistance to hydroplaning is maintained. In the present embodiment of the invention, the maximum groove width W2m is set to be increased in proportion to the absolute value of the angle θ1.

The maximum groove width W3 of the protruding portion 17 can be set as appropriate. In each of the first shoulder groove-like portions 5, if the maximum groove width W3 and the groove width W2 (maximum groove width W2m) at the first tread ground contact end e1 are set to be equal to each other, the maximum groove width W3 becomes greater than required in the first shoulder groove-like portion 5 that has the angle θ1 (absolute value of the angle θ1) indicating a great value. Thus, steering sound may become worse during cornering. Therefore, the maximum groove width W3 of the protruding portion 17 may be less than the maximum groove width W2m. Thus, in the first shoulder groove-like portion 5, steering sound can be inhibited from becoming worse during cornering, without reducing a groove volume from the first shoulder circumferential groove 3A to the first tread ground contact end e1.

In order to effectively inhibit steering sound from becoming worse, the maximum groove width W3 of the protruding portion 17 is preferably set to be not greater than 7.0 mm. Thus, the maximum groove width W3 is inhibited from becoming greater than required, and steering sound can be reduced during cornering. In order to effectively exhibit such an effect, the maximum groove width W3 is more preferably set to be not greater than 6.4 mm.

Although the first shoulder land portion 4A may include a plurality of kinds of the protruding portions 17 having different maximum groove widths W3, it is preferable that the maximum groove widths W3 of all of the protruding portions 17 are substantially equal to each other in order to prevent steering sound from becoming worse. Thus, steering sound is effectively inhibited from becoming worse during cornering. "Substantially equal to each other" means that the maximum groove widths W3 are equal to each other in consideration of, for example, a molding error as described above. In the present embodiment of the invention, the maximum groove width W3 is made equal to the maximum groove width W2m (in this example, the first shoulder groove-like portion 5 of the third portion 13 at which the angle θ1 indicates zero) having the smallest value among the maximum groove widths W2m of all of the first shoulder groove-like portions 5.

An angle θ3 between paired groove walls 5w and 5w of the first shoulder groove-like portion 5 can be set as appropriate. If the angle θ3 is small, drainage efficiency may not be maintained on the connecting portion 7 side (inner side in the tire axial direction). Meanwhile, if the angle θ3 is great, the maximum groove width W2m of the first shoulder groove-like portion 5 becomes greater than required. Thus, deviation between the maximum groove width W2m and the maximum groove width W3 of the protruding portion 17 is increased, so that risk of making steering sound worse is increased. From such a viewpoint, the angle θ3 is preferably 2 to 15° and more preferably 3 to 11°.

### [Second shoulder groove-like portion (third embodiment of the present invention)]

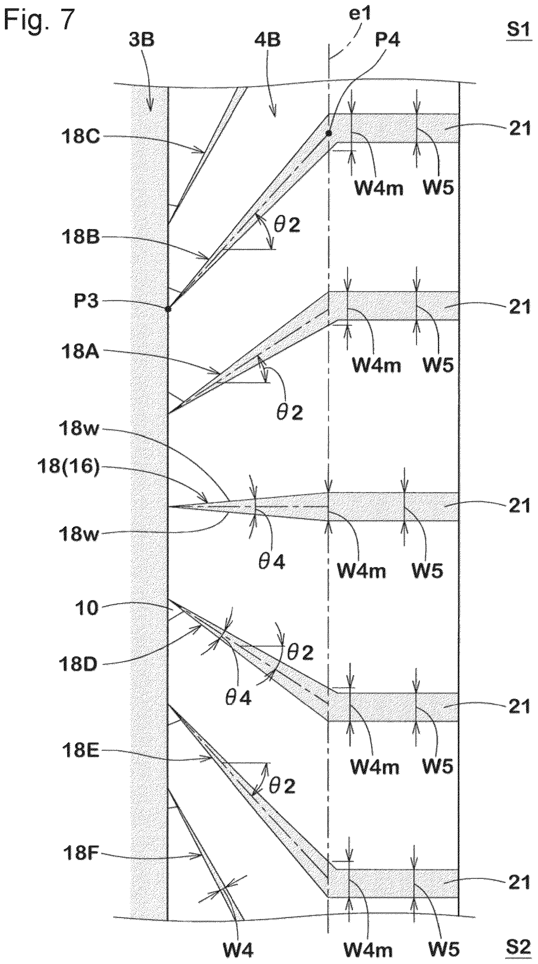

FIG. 7 is a partially enlarged view of the second shoulder land portion 4B in FIG. 5. In the present embodiment of the invention, each of the plurality of second shoulder groove-like portions 18 is formed as a lateral groove in which a groove width W4 (maximum groove width W4m) is greater than 1.0 mm. In the present embodiment of the invention, the groove width W4 is specified as an average of groove widths in a portion from the second shoulder circumferential groove 3B (third intersection point P3) to the second tread ground contact end e2 (fourth intersection point P4). The second shoulder groove-like portion 18 having such a structure allows water on a road surface to be discharged at the second shoulder land portion 4B during running on a wet road surface, and allows resistance to hydroplaning to be enhanced.

In the present embodiment of the invention, the groove width W4 is gradually increased from the second shoulder circumferential groove 3B toward the second tread ground contact end e2. Thus, the second shoulder groove-like portion 18 is formed in a wedge-like shape projecting inwardly in the tire axial direction, similarly to the first shoulder groove-like portion 5, whereby noise performance and resistance to hydroplaning are enhanced.

In the present embodiment of the invention, the plurality of second shoulder groove-like portions 18 are set to have a groove volume increased in proportion to the angle θ2, similarly to the first shoulder groove-like portion 5 (shown in FIG. 6). Thus, in the present embodiment of the invention, the groove width W4 of the second shoulder groove-like portion 18 that has the angle θ2 (in this example, absolute value of the angle θ2) indicating a great value can be inhibited from being reduced, and resistance to hydroplaning is maintained.

The maximum groove width W5 of the protruding portion 21 is preferably less than the maximum groove width W4m of the second shoulder groove-like portion 18. Thus, in the second shoulder groove-like portion 18, steering sound is inhibited from becoming worse during cornering, without reducing a groove volume from the second shoulder circumferential groove 3B to the second tread ground contact end e2. The maximum groove width W5 of the protruding portion 21 is preferably set to be in the same range as that for the maximum groove width W3 (shown in FIG. 6) of the protruding portion 17 of the first shoulder land portion 4A described above. Preferably, the maximum groove widths W5 of all of the protruding portions 21 are substantially equal to each other in order to prevent steering sound from becoming worse.

An angle θ4 between paired groove walls 18w and 18w of the second shoulder groove-like portion 18 is preferably set to be in the same range as that for the angle θ3 of the first shoulder groove-like portion 5 described above. Thus, resistance to hydroplaning is maintained while steering sound is inhibited from becoming worse.

### Examples

### [Example A]

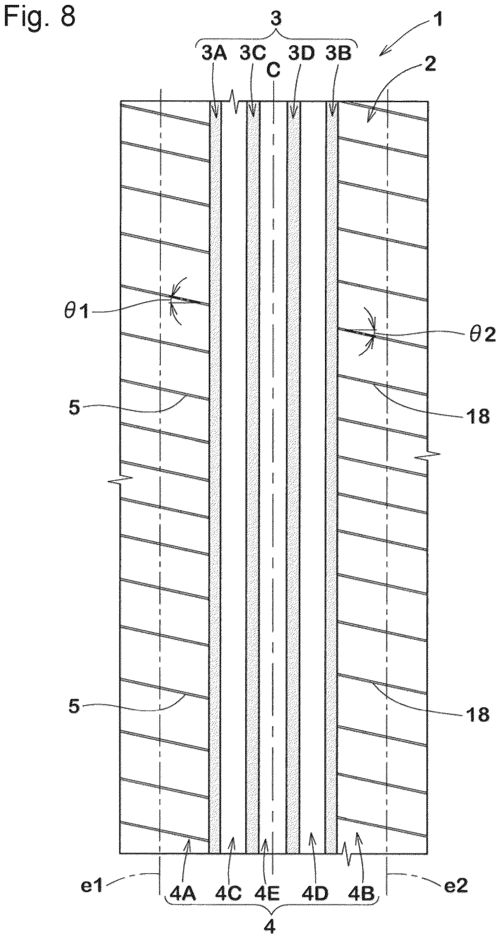

Tires shown in FIG. 1 were produced as test tires based on the specifications in Tables 1 and 2 (Example 1 to Example 7, Comparative examples 1 to 2). For comparison, a tire (conventional example 1) in which the angle θ1 of the first shoulder groove-like portion and the angle Θ2 of the second shoulder groove-like portion were set to be equal to each other as shown in FIG. 8, was produced as a test tire. For each test tire, noise performance and uneven wear resistance were evaluated. The specifications were the same among the tires except for the structures indicated in Tables 1 and 2, and the tire size and the like were as indicated below. The test methods were as indicated below. The test results are indicated in Tables 1 and 2.
Tire size: 205/55R16
Rim size: 16×6.5J
Internal pressure: 230 kPa
Vehicle: electric vehicle made in Japan
Tire mounting positions: all wheels

### <Noise performance>

A test driver made sensory evaluation for noise generated at the tire when the above-described vehicle was caused to run on a dry road in a test course. The results are indicated as scores with the score of conventional example 1 being 100. The greater the value is, the better the noise performance is.

### <Uneven wear resistance>

After the above-described vehicle was caused to run over a certain distance, a degree of uneven wear of each of the first shoulder land portion and the second shoulder land portion was visually checked and evaluated. The results are indicated as scores with the score of conventional example 1 being 100. The greater the value is, the better the uneven wear resistance is.

**[Table 1]**

| | Conventional example 1 | Comparative example 1 | Comparative example 2 | Example 1 | Example 2 | Example 3 |
|---|---|---|---|---|---|---|
| Development of tread | FIG. 8 | FIG. 1 | FIG. 1 | FIG. 1 | FIG. 1 | FIG. 1 |
| Range of angle θ1, θ2 (°) | -5,5 | -80 to 80 | -70 to 70 | -50 to 50 | -65 to 65 | -70 to 70 |
| Range of first pitch length L1 | 0.8 to 1.2 | 0.4 to 1.6 | 0.4 to 1.6 | 0.7 to 1.3 | 0.6 to 1.4 | 0.5 to 1.5 |
| Groove width W2, W4 (mm) | 0.6 | 0.6 | 0.6 | 0.6 | 0.6 | 0.6 |
| Noise performance (score) | 100 | 105 | 104 | 105 | 106 | 108 |
| Uneven wear resistance (score) | 100 | 93 | 94 | 100 | 100 | 100 |
| Overall evaluation (score) | 200 | 198 | 198 | 205 | 206 | 208 |

**[Table 2]**

| | Example 4 | Example 5 | Example 6 | Example 7 |
|---|---|---|---|---|
| Development of tread | FIG. 1 | FIG. 1 | FIG. 1 | FIG. 1 |
| Ranges of angle θ1, θ2 (°) | -65 to 65 | -65 to 65 | -65 to 65 | -65 to 65 |
| Range of first pitch length L1 | 0.6 to 1.4 | 0.6 to 1.4 | 0.6 to 1.4 | 0.6 to 1.4 |
| Groove width W2, W4 (mm) | 0.2 | 0.8 | 1.0 | 1.5 |
| Noise performance (score) | 107 | 104 | 103 | 102 |
| Uneven wear resistance (score) | 102 | 100 | 100 | 99 |
| Overall evaluation (score) | 209 | 204 | 203 | 201 |

The test results indicate that noise performance was enhanced without degrading uneven wear resistance in the tires of the examples as compared with the tires of the conventional example and the comparative examples.

### [Example B]

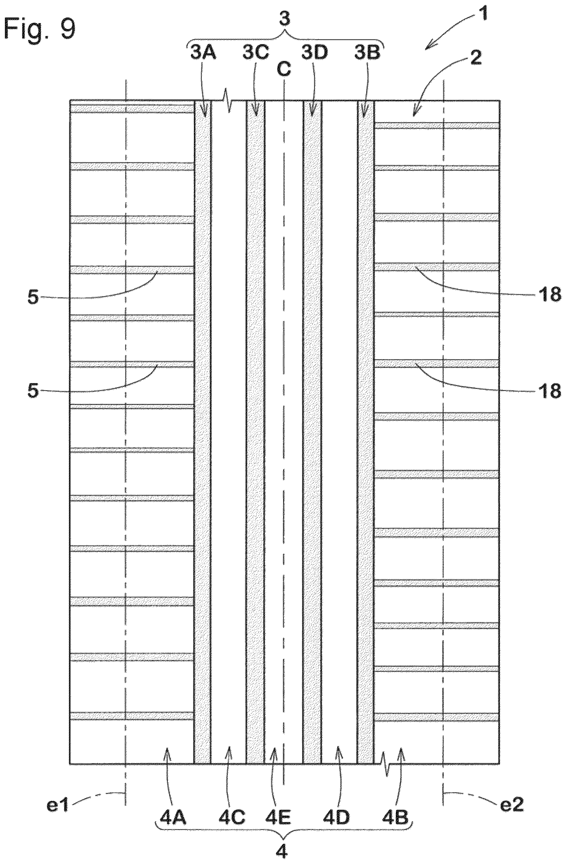

Tires shown in FIG. 5 were produced as sample tires based on the specifications in Table 3 (Example 8 to Example 13, Comparative examples 3 to 4). For comparison, a tire (conventional example 2) in which the angle θ1 of the first shoulder groove-like portion and the angle θ2 of the second shoulder groove-like portion were set to be equal to each other as shown in FIG. 9, was produced as a test tire. For each test tire, noise performance and uneven wear resistance were evaluated.

The specifications were the same among the tires except for the structures indicated in Table 3, and the tire size and the like were as indicated for Example A. The test methods were the same as those for Example A except for the matter indicated below. The test results are indicated as scores with the score of Conventional example 2 being 100. The test results are indicated in Table 3.

### <Resistance to hydroplaning>

A test driver made sensory evaluation for running performance when the above-described vehicle was caused to run on a wet road surface. The results are indicated as scores with the score of Conventional example 2 being 100. The greater the value is, the more excellent resistance to hydroplaning (wet performance) is.

### <Steering noise performance>

A test driver made sensory evaluation for steering sound generated when the above-described vehicle was caused to run and perform cornering on a dry road in a test course. The results are indicated as scores with the score of Conventional example 2 being 100. The greater the value is, the better the steering noise performance is.

**[Table 3]**

| | Conventional example 2 | Example 8 | Comparative example 3 | Comparative example 4 | Example 9 | Example 10 | Example 11 | Example 12 | Example 13 |
|---|---|---|---|---|---|---|---|---|---|
| Development of tread | FIG. 9 | FIG. 5 | FIG. 5 | FIG. 5 | FIG. 5 | FIG. 5 | FIG. 5 | FIG. 5 | FIG. 5 |
| Range of angle θ1, θ2 (°) | 0 | -65 to 65 | -80 to 80 | -70 to 70 | -50 to 50 | -65 to 65 | -70 to 70 | -70 to 70 | -70 to 70 |
| Range of first pitch length L1 | 0.8 to 1.2 | 0.6 to 1.4 | 0.4 to 1.6 | 0.4 to 1.6 | 0.7 to 1.3 | 0.6 to 1.4 | 0.5 to 1.5 | 0.5 to 1.5 | 0.5 to 1.5 |
| Whether or not groove width W2, W4 was gradually increased | not gradually increased | not gradually increased | gradually increased | gradually increased | gradually increased | gradually increased | gradually increased | gradually increased | gradually increased |
| Maximum groove width W3, W5 (mm) of protruding portion | 3.2 | 3.2 to 4.4 | 6.4 | 6.4 | 6.4 | 6.4 | 6.4 | 6.4 to 8.8 | 6.4 |
| Whether or not groove volume was gradually increased (in proportion to angle θ1, θ2) | gradually increased | gradually increased | gradually increased | gradually increased | gradually increased | gradually increased | gradually increased | gradually increased | not gradually increased |
| Noise performance (score) | 100 | 103 | 105 | 104 | 105 | 106 | 107 | 106 | 107 |
| Resistance to hydroplaning (score) | 100 | 100 | 100 | 100 | 100 | 100 | 100 | 100 | 95 |
| Steering noise performance (score) | 100 | 100 | 100 | 100 | 100 | 100 | 100 | 98 | 100 |
| Uneven wear resistance (score) | 100 | 99 | 94 | 95 | 100 | 100 | 100 | 100 | 100 |
| Overall evaluation (score) | 400 | 402 | 399 | 399 | 405 | 406 | 407 | 404 | 402 |

The test results indicate that noise performance was enhanced without degrading uneven wear resistance in the tires of the examples as compared with the tires of the conventional example and the comparative examples. In the examples in which the maximum groove width of the protruding portion was set in a preferable range, steering sound was inhibited from becoming worse. Furthermore, in the examples in which the groove volumes of the first shoulder groove-like portion and the second shoulder groove-like portion were increased in proportion to the angles θ1, θ2, resistance to hydroplaning was enhanced.

## Claims

1. A tire (1) comprising
a tread portion (2),
wherein the tread portion (2) comprises a first tread ground contact end (e1) on one side in a tire axial direction, a first shoulder circumferential groove (3A) disposed closest to the first tread ground contact end (e1), and a first shoulder land portion (4A) demarcated to be disposed outwardly of the first shoulder circumferential groove (3A) in the tire axial direction,
wherein a plurality of first shoulder groove-like portions (5) extending from the first shoulder circumferential groove (3A) to the first tread ground contact end (e1) is disposed in the first shoulder land portion (4A),
wherein a pair of first shoulder groove-like portions (5) adjacent to each other in a tire circumferential direction among the plurality of first shoulder groove-like portions (5) have different angles θ1 relative to the tire axial direction,
wherein the plurality of first shoulder groove-like portions (5) comprises a plurality of kinds of first shoulder groove-like portions (5) having different first pitch lengths (L1) each representing a pitch length in the tire circumferential direction at a connecting portion (7) to the first shoulder circumferential groove (3A), **characterized in that**
a maximum value (L1m) of the first pitch length (L1) is 1.2 to 1.5 times an average of the first pitch lengths (L1).

2. The tire (1) according to claim 1, wherein a minimum value (L1s) of the first pitch length (L1) is 0.5 to 0.8 times the average of the first pitch lengths (L1).

3. The tire (1) according to claim 1 or 2, wherein the angle θ1 is -70 to 70° when an angle representing inclination to one side in the tire circumferential direction is set as having a positive value.

4. The tire (1) according to any one of claims 1 to 3,
wherein a plurality of first units (8) formed of a part of the first shoulder groove-like portions (5) among the plurality of first shoulder groove-like portions (5) are aligned in the tire circumferential direction in the first shoulder land portion (4A), and
wherein the first units (8) each comprise
a first portion (11) in which the first shoulder groove-like portions (5) that have the angles θ1 indicating positive values when an angle representing inclination to the one side in the tire circumferential direction is set as having a positive value, are continuously disposed, and
a second portion (12) in which the first shoulder groove-like portions (5) that have the angles θ1 indicating negative values are continuously disposed.

5. The tire (1) according to claim 4, wherein each first unit (8) further comprises a third portion (13) including the first shoulder groove-like portion (5) that has the angle θ1 indicating zero.

6. The tire (1) according to claim 4 or 5, wherein the angles θ1 of the first shoulder groove-like portions (5) of each of the first portion (11) and the second portion (12) continuously vary between a maximum value and a minimum value of the angle.

7. The tire (1) according to any one of claims 1 to 6, wherein a second pitch length (L2) that is a pitch length, in the tire circumferential direction, for the plurality of first shoulder groove-like portions (5) at a center position (t1), in the tire axial direction, of the first shoulder land portion (4A), is substantially constant.

8. The tire (1) according to any one of claims 1 to 7,
wherein the first shoulder land portion (4A) comprises a plurality of first shoulder blocks (6) demarcated by the plurality of first shoulder groove-like portions (5), and
wherein areas of tread surfaces (6t) of the plurality of first shoulder blocks (6) are substantially equal to each other.

9. The tire (1) according to any one of claims 1 to 8, wherein the plurality of first shoulder groove-like portions (5) are sipes each having a groove width (W2) of not greater than 1.0 mm.

10. The tire (1) according to any one of claims 1 to 8, wherein the plurality of first shoulder groove-like portions (5) are lateral grooves each having a groove width (W2) of greater than 1.0 mm.

11. The tire (1) according to claim 10, wherein the groove width (W2) is gradually increased from the first shoulder circumferential groove (3A) toward the first tread ground contact end (e1).

12. The tire (1) according to claim 10 or 11, wherein each of the plurality of first shoulder groove-like portions (5) has a groove volume increased in proportion to the angle Θ1.

13. The tire (1) according to any one of claims 10 to 12,
wherein each of the plurality of first shoulder groove-like portions (5) comprises a protruding portion (17) extending outwardly from the first tread ground contact end (e1) in the tire axial direction, and
wherein a maximum groove width (W3) of the protruding portion (17) is not greater than 7.0 mm.

14. The tire (1) according to any one of claims 1 to 13,
wherein the tread portion (2) comprises a second tread ground contact end (e2) on another side in the tire axial direction, a second shoulder circumferential groove (3B) disposed closest to the second tread ground contact end (e2), and a second shoulder land portion (4B) demarcated so as to be disposed outwardly of the second shoulder circumferential groove (3B) in the tire axial direction,
wherein a plurality of second shoulder groove-like portions (18) extending from the second shoulder circumferential groove (3B) to the second tread ground contact end (e2) is disposed in the second shoulder land portion (4B),
wherein a pair of second shoulder groove-like portions (18) adjacent to each other in the tire circumferential direction among the plurality of second shoulder groove-like portions (18) have different angles θ2 relative to the tire axial direction, and
wherein the plurality of second shoulder groove-like portions (18) comprises a plurality of kinds of second shoulder groove-like portions (18) having different third pitch lengths (L3) each representing a pitch length in the tire circumferential direction at a connecting portion (22) to the second shoulder circumferential groove (3B).

15. The tire (1) according to claim 14, wherein the second shoulder groove-like portions (18) and the first shoulder groove-like portions (5) closest to the second shoulder groove-like portions (18) in the tire circumferential direction are inclined in a same direction.

16. The tire (1) according to claim 14, wherein the second shoulder groove-like portions (18) and the first shoulder groove-like portions (5) closest to the second shoulder groove-like portions (18) in the tire circumferential direction are inclined in opposite directions.

## Patentansprüche

1. Reifen (1), umfassend:
einen Laufflächenabschnitt (2),
wobei der Laufflächenabschnitt (2) ein erstes Laufflächenbodenkontaktende (e1) auf einer Seite in Reifenaxialrichtung, eine erste Schulterumfangsrille (3A), die am nächsten zum ersten Laufflächenbodenkontaktende (e1) angeordnet ist, und einen ersten Schulterstegabschnitt (4A) umfasst, der so abgegrenzt ist, dass er in Reifenaxialrichtung außerhalb der ersten Schulterumfangsrille (3A) angeordnet ist,
wobei eine Vielzahl von ersten rillenartigen Schulterabschnitten (5), die sich von der ersten Schulterumfangsrille (3A) zum ersten Laufflächenbodenkontaktende (e1) erstrecken, im ersten Schulterstegabschnitt (4A) angeordnet ist,
wobei ein Paar erster rillenartiger Schulterabschnitte (5), die in einer Reifenumfangsrichtung benachbart zueinander sind, unter der Vielzahl erster rillenartiger Schulterabschnitte (5) unterschiedliche Winkel θ1 relativ zu der Reifenaxialrichtung aufweisen,
wobei die Vielzahl erster rillenartiger Schulterabschnitte (5) eine Vielzahl von Arten erster rillenartiger Schulterabschnitte (5) mit unterschiedlichen ersten Teilungslängen (L1) umfasst, die jeweils eine Teilungslänge in der Reifenumfangsrichtung an einem Verbindungsabschnitt (7) zu der ersten Schulterumfangsrille (3A) darstellen, **dadurch gekennzeichnet, dass**
ein Maximalwert (L1m) der ersten Teilungslänge (L1) das 1,2- bis 1,5-fache eines Durchschnitts der ersten Teilungslängen (L1) beträgt.

2. Reifen (1) nach Anspruch 1, wobei ein Minimalwert (L1s) der ersten Teilungslänge (L1) das 0,5- bis 0,8-fache des Durchschnitts der ersten Teilungslängen (L1) beträgt.

3. Reifen (1) nach Anspruch 1 oder 2, wobei der Winkel θ1 -70° bis 70° beträgt, wenn ein Winkel, der die Neigung zu einer Seite in der Reifenumfangsrichtung darstellt, so festgelegt ist, dass er einen positiven Wert hat.

4. Reifen (1) nach einem der Ansprüche 1 bis 3,
wobei eine Vielzahl von ersten Einheiten (8), die aus einem Teil der ersten rillenartigen Schulterabschnitte (5) unter der Vielzahl von ersten rillenartigen Schulterabschnitten (5) gebildet sind, in der Reifenumfangsrichtung in dem ersten Schulterstegabschnitt (4A) ausgerichtet sind, und
wobei die ersten Einheiten (8) jeweils
einen ersten Abschnitt (11), in dem die ersten rillenartigen Schulterabschnitte (5), die die Winkel θ1 aufweisen, die positive Werte anzeigen, wenn ein Winkel, der die Neigung zu der einen Seite in der Reifenumfangsrichtung darstellt, als einen positiven Wert aufweisend festgelegt ist, kontinuierlich angeordnet sind, und
einen zweiten Abschnitt (12), in dem die ersten rillenartigen Schulterabschnitte (5), die die Winkel θ1 aufweisen, die negative Werte anzeigen, kontinuierlich angeordnet sind.

5. Reifen (1) nach Anspruch 4, wobei jede erste Einheit (8) zusätzlich einen dritten Abschnitt (13) aufweist, der den ersten rillenartigen Schulterabschnitt (5) aufweist, der den Winkel θ1 aufweist, der Null anzeigt.

6. Reifen (1) nach Anspruch 4 oder 5, wobei die Winkel θ1 der ersten rillenartigen Schulterabschnitte (5) sowohl des ersten Abschnitts (11) als auch des zweiten Abschnitts (12) kontinuierlich zwischen einem Maximalwert und einem Minimalwert des Winkels variieren.

7. Reifen (1) nach einem der Ansprüche 1 bis 6, wobei eine zweite Teilungslänge (L2), die eine Teilungslänge in der Reifenumfangsrichtung für die Vielzahl erster rillenartiger Schulterabschnitte (5) an einer Mittelposition (t1) in der Axialrichtung des ersten Schulterstegabschnitts (4A) ist, im Wesentlichen konstant ist.

8. Reifen (1) nach einem der Ansprüche 1 bis 7,
wobei der erste Schulterstegabschnitt (4A) eine Vielzahl erster Schulterblöcke (6) umfasst, die durch die Vielzahl erster rillenartiger Schulterabschnitte (5) abgegrenzt sind, und
wobei Bereiche von Laufflächen (6t) der Vielzahl erster Schulterblöcke (6) im Wesentlichen gleich sind.

9. Reifen (1) nach einem der Ansprüche 1 bis 8, wobei die Vielzahl erster rillenartiger Schulterabschnitte (5) Lamellen sind, die jeweils eine Rillenbreite (W2) von nicht mehr als 1,0 mm aufweisen.

10. Reifen (1) nach einem der Ansprüche 1 bis 8, wobei die Vielzahl erster rillenartiger Schulterabschnitte (5) Querrillen sind, die jeweils eine Rillenbreite (W2) von mehr als 1,0 mm aufweisen.

11. Reifen (1) nach Anspruch 10, wobei die Rillenbreite (W2) von der ersten Schulterumfangsrille (3A) zum ersten Laufflächenbodenkontaktende (e1) hin allmählich zunimmt.

12. Reifen (1) nach Anspruch 10 oder 11, wobei jeder der Vielzahl erster rillenartiger Schulterabschnitte (5) ein Rillenvolumen aufweist, das proportional zum Winkel θ1 zunimmt.

13. Reifen (1) nach einem der Ansprüche 10 bis 12,
wobei jeder der Vielzahl erster rillenartiger Schulterabschnitte (5) einen vorstehenden Abschnitt (17) umfasst, der sich vom ersten Laufflächenbodenkontaktende (e1) in der Reifenaxialrichtung nach außen erstreckt, und
wobei eine maximale Rillenbreite (W3) des vorstehenden Abschnitts (17) nicht größer als 7,0 mm ist.

14. Reifen (1) nach einem der Ansprüche 1 bis 13,
wobei der Laufflächenabschnitt (2) ein zweites Laufflächenbodenkontaktende (e2) auf einer anderen Seite in der Reifenaxialrichtung, eine zweite Schulterumfangsrille (3B), die am nächsten zu dem zweiten Laufflächenbodenkontaktende (e2) angeordnet ist, und einen zweiten Schulterstegabschnitt (4B) umfasst, der so abgegrenzt ist, dass er in der Reifenaxialrichtung außerhalb der zweiten Schulterumfangsrille (3B) angeordnet ist,
wobei eine Vielzahl von zweiten rillenartigen Schulterabschnitten (18), die sich von der zweiten Schulterumfangsrille (3B) zum zweiten Laufflächenbodenkontaktende (e2) erstrecken, im zweiten Schulterstegabschnitt (4B) angeordnet ist,
wobei ein Paar von in der Umfangsrichtung des Reifens benachbarten zweiten rillenartigen Schulterabschnitten (18) unter der Vielzahl zweiter rillenartiger Schulterabschnitte (18) unterschiedliche Winkel θ2 relativ zur Reifenaxialrichtung aufweisen, und
wobei die Vielzahl der zweiten rillenartigen Schulterabschnitte (18) eine Vielzahl von Arten von zweiten rillenartigen Schulterabschnitten (18) mit unterschiedlichen dritten Teilungslängen (L3) umfasst, die jeweils eine Teilungslänge in der Reifenumfangsrichtung an einem Verbindungsabschnitt (22) zu der zweiten Schulterumfangsrille (3B) darstellen.

15. Reifen (1) nach Anspruch 14, wobei die zweiten rillenartigen Schulterabschnitte (18) und die ersten rillenartigen Schulterabschnitte (5), die den zweiten rillenartigen Schulterabschnitten (18) in der Reifenumfangsrichtung am nächsten sind, in derselben Richtung geneigt sind.

16. Reifen (1) nach Anspruch 14, wobei die zweiten rillenartigen Schulterabschnitte (18) und die ersten rillenartigen Schulterabschnitte (5), die den zweiten rillenartigen Schulterabschnitten (18) in der Reifenumfangsrichtung am nächsten sind, in entgegengesetzte Richtungen geneigt sind.

## Revendications

1. Pneu (1), comprenant
une partie de bande de roulement (2),
dans lequel la partie de bande de roulement (2) comprend une première extrémité de contact avec le sol de bande de roulement (e1) sur un côté dans une direction axiale de pneu, une première rainure circonférentielle d'épaulement (3A) disposée la plus proche de la première extrémité de contact avec le sol de bande de roulement (e1), et une première une partie d'appui d'épaulement (4A) délimitée pour être disposée vers l'extérieur de la première rainure circonférentielle d'épaulement (3A) dans la direction axiale de pneu,
dans lequel une pluralité de premières parties en forme de rainure d'épaulement (5) s'étendant de la première rainure circonférentielle d'épaulement (3A) à la première extrémité de contact avec le sol de bande de roulement (e1) sont disposées dans la première partie d'appui d'épaulement (4A),
dans lequel une paire de premières parties en forme de rainure d'épaulement (5) adjacentes les unes aux autres dans une direction circonférentielle de pneu parmi la pluralité de premières parties en forme de rainure d'épaulement (5) présentent des angles Θ1 différents par rapport à la direction axiale de pneu,
dans lequel la pluralité de premières parties en forme de rainure d'épaulement (5) comprennent une pluralité de types de premières parties en forme de rainure d'épaulement (5) présentent différentes premières longueurs de pas (L1), chacune représentant une longueur de pas dans la direction circonférentielle de pneu au niveau d'une partie de connexion (7) à la première rainure circonférentielle d'épaulement (3A), **caractérisé en ce que**
une valeur maximale (L1m) de la première longueur de pas (L1) correspond à 1,2 à 1,5 fois une moyenne des premières longueurs de pas (L1).

2. Pneu (1) selon la revendication 1, dans lequel une valeur minimale (L1s) de la première longueur de pas (L1) correspond à 0,5 à 0,8 fois la moyenne des premières longueurs de pas (L1).

3. Pneu (1) selon la revendication 1 ou 1, dans lequel l'angle Θ1 est de -70 à 70° lorsqu'un angle représentant l'inclinaison d'un côté dans la direction circonférentielle de pneu est défini comme présentant une valeur positive.

4. Pneu (1) selon l'une quelconque des revendications 1 à 3,
dans lequel une pluralité de premières unités (8) formées d'une partie des premières parties en forme de rainure d'épaulement (5) parmi la pluralité de premières parties en forme de rainure d'épaulement (5) sont alignées dans la direction circonférentielle de pneu dans la première partie d'appui d'épaulement (4A), et
dans lequel les premières unités (8) comprennent chacune
une première partie (11) dans laquelle les premières parties en forme de rainure d'épaulement (5), qui présentent les angles Θ1 indiquant des valeurs positives lorsqu'un angle représentant l'inclinaison d'un côté dans la direction circonférentielle de pneu est défini comme présentant une valeur positive, sont disposées en continu, et
une deuxième partie (12) dans laquelle les premières parties en forme de rainure d'épaulement (5) qui présentent les angles Θ1 indiquant des valeurs négatives sont disposées en continu.

5. Pneu (1) selon la revendication 4, dans lequel chaque première unité (8) comprend en outre une troisième partie (13) incluant la première partie en forme de rainure d'épaulement (5) qui présente l'angle Θ1 indiquant zéro.

6. Pneu (1) selon la revendication 4 ou 5, dans lequel les angles Θ1 des premières parties en forme de rainure d'épaulement (5) de chacune de la première partie (11) et de la deuxième partie (12) varient continuellement entre une valeur maximale et une valeur minimale de l'angle.

7. Pneu (1) selon l'une quelconque des revendications 1 à 6, dans lequel une deuxième longueur de pas (L2) qui est une longueur de pas, dans la direction circonférentielle de pneu, pour la pluralité de premières parties en forme de rainure d'épaulement (5) à une position centrale (t1), dans la direction axiale de pneu, de la première partie d'appui d'épaulement (4A), est sensiblement constante.

8. Pneu (1) selon l'une quelconque des revendications 1 à 7,
dans lequel la première partie d'appui d'épaulement (4A) comprend une pluralité de premiers blocs d'épaulement (6) délimités par la pluralité de premières parties en forme de rainure d'épaulement (5), et
dans lequel des zones de surfaces de bande de roulement (6t) de la pluralité de premiers blocs d'épaulement (6) sont sensiblement égales les unes aux autres.

9. Pneu (1) selon l'une quelconque des revendications 1 à 8, dans lequel la pluralité de premières parties en forme de rainure d'épaulement (5) sont des lamelles présentant chacune une largeur de rainure (W2) inférieure ou égale à 1,0 mm.

10. Pneu (1) selon l'une quelconque des revendications 1 à 8, dans lequel la pluralité de premières parties en forme de rainure d'épaulement (5) sont des rainures latérales présentant chacune une largeur de rainure (W2) supérieure à 1,0 mm.

11. Pneu (1) selon la revendication 10, dans lequel la largeur de rainure (W2) est progressivement augmentée de la première rainure circonférentielle d'épaulement (3 A) vers la première extrémité de contact avec le sol de bande de roulement (e1).

12. Pneu (1) selon la revendication 10 ou 11, dans lequel chacune de la pluralité de premières parties en forme de rainure d'épaulement (5) présente un volume de rainure augmenté proportionnellement à l'angle Θ1.

13. Pneu (1) selon l'une quelconque des revendications 10 à 12,
dans lequel chacune de la pluralité de premières parties en forme de rainure d'épaulement (5) comprend une partie saillante (17) s'étendant vers l'extérieur à partir de la première extrémité de contact avec le sol de bande de roulement (e1) dans la direction axiale de pneu, et
dans lequel une largeur de rainure maximale (W3) de la partie saillante (17) est inférieure ou égale à 7,0 mm.

14. Pneu (1) selon l'une quelconque des revendications 1 à 13,
dans lequel la partie de bande de roulement (2) comprend une seconde extrémité de contact avec le sol de bande de roulement (e2) sur un autre côté dans la direction axiale de pneu, une seconde rainure circonférentielle d'épaulement (3B) disposée la plus proche de la seconde extrémité de contact avec le sol de bande de roulement (e2), et une seconde partie d'appui d'épaulement (4B) délimitée de manière à être disposée vers l'extérieur de la seconde rainure circonférentielle d'épaulement (3B) dans la direction axiale de pneu,
dans lequel une pluralité de secondes parties en forme de rainure d'épaulement (18) s'étendant de la seconde rainure circonférentielle d'épaulement (3B) à la seconde extrémité de contact avec le sol de bande de roulement (e2) sont disposées dans la seconde partie d'appui d'épaulement (4B),
dans lequel une paire de secondes parties en forme de rainure d'épaulement (18) adjacentes les unes aux autres dans la direction circonférentielle de pneu parmi la pluralité de secondes parties en forme de rainure d'épaulement (18) présentent des angles Θ2 différents par rapport à la direction axiale de pneu, et
dans lequel la pluralité de secondes parties en forme de rainure d'épaulement (18) comprennent une pluralité de types de secondes parties en forme de rainure d'épaulement (18) présentant différentes troisièmes longueurs de pas (L3), chacune représentant une longueur de pas dans la direction circonférentielle de pneu au niveau d'une partie de connexion (22) à la seconde rainure circonférentielle d'épaulement (3B).

15. Pneu (1) selon la revendication 14, dans lequel les secondes parties en forme de rainure d'épaulement (18) et les premières parties en forme de rainure d'épaulement (5) les plus proches des secondes parties en forme de rainure d'épaulement (18) dans la direction circonférentielle de pneu sont inclinées dans une même direction.

16. Pneu (1) selon la revendication 14, dans lequel les secondes parties en forme de rainure d'épaulement (18) et les premières parties en forme de rainure d'épaulement (5) les plus proches des secondes parties en forme de rainure d'épaulement (18) dans la direction circonférentielle de pneu sont inclinées dans des directions opposées.
